# EUROPÄISCHE PATENTANMELDUNG

(11) **EP 2 792 949 A2**
(43) Veröffentlichungstag der Anmeldung: **22.10.2014**
(21) Anmeldenummer: 14163108.5
(22) Anmeldetag: 02.04.2014
(51) Int. Cl.: F23G 7/00, F23J 1/00, F23G 5/30

(54) **Verfahren zur Gewinnung von phosphorhaltigen Verbindungen aus Klärschlamm**

(30) Priorität: 15.04.2013 DE 102013103770
(71) Anmelder: RWE Power AG, 45128 Essen (DE)
(72) Erfinder: Lehmann, Bastian, 50739 Köln (DE); Peters, Uwe, 51429 Bergisch Gladbach (DE)
(74) Vertreter: Heine, Christian Klaus

(57) **Zusammenfassung**

Das erfindungsgemäße Verfahren zur Gewinnung von phosphorhaltigen Verbindungen aus Klärschlamm 1 umfasst die folgenden Schritte:
a) Verbrennung 2 des Klärschlamms 1 zu einer Asche 3;
b) mechanische Klassierung 4 der Asche 3 zur Selektierung einer Aschefraktion 6 mit einer Partikelgröße unterhalb einer vorgebbaren Maximalpartikelgröße; und
c) Behandlung der selektierten Aschefraktion 6 zur Gewinnung von Phosphorhaltigen Verbindungen.

Die hier beschriebene Verfahrensführung eines Verfahrens zur Gewinnung von phosphorhaltigen Verbindungen aus Klärschlamm 1 führt aufgrund der mechanischen Klassierung 4 zu einer deutlich höheren Ausbeute an Phosphor und zu einem deutlich höheren Phosphorgehalt im endgültigen Endprodukt 8. Das hier beschriebene Verfahren erlaubt eine effiziente Verbrennung des anfallenden Klärschlamms 1 bei einer gleichzeitig vorliegenden hohen Phosphorausbeute in den entsprechend erhaltenen Endprodukten 8 nach mechanischer Klassierung der Asche 3. So kann sowohl bei der Monoverbrennung als auch bei der Mitverbrennung von Klärschlamm 1 ein relativ hochphosphorhaltiger Dünger erhalten werden, so dass der im Abwasser vorhandene Phosphorgehalt nicht ungenutzt verschwendet wird. So kann eine effiziente Nutzung dieser Phosphorverbindungen als Dünger sichergestellt werden.

## Beschreibung

Gegenstand der vorliegenden Erfindung ist ein Verfahren und eine Vorrichtung zur Gewinnung von phosphorhaltigen Verbindungen aus Klär-schlamm, insbesondere zur Gewinnung solcher Verbindungen aus der Asche der Mono- oder Mitverbrennung von Klärschlamm.

Phosphor ist ein Element, welches insbesondere in Düngemitteln eingesetzt wird, da Phosphor ein unverzichtbares Element beispielsweise beim Aufbau der Erbsubstanz und beim Energiestoffwechsel in Lebewesen ist. Dem Boden wird durch Pflanzenwachstum und anschließende Ernte Phosphor entzogen, dieser muss zum Erhalt der Ertragsfähigkeit des Bodens diesem wieder zugeführt werden. Phosphor wird einerseits als Rohphosphat im Bergbau gefördert, andererseits kann es auch aus anderen Quellen zurückgewonnen werden. Phosphor und Phosphate finden sich beispielsweise in Klärschlämmen, da Phosphate beispielsweise auch in Waschmitteln zum Einsatz kommen. Klärschlämme werden heutzutage entweder direkt als Dünger aufgebracht oder aber dienen der thermischen Verwertung im Rahmen einer Monoverbrennung oder einer Mitverbrennung. Auch bei der Monoverbrennung müssen aufgrund der meist vergleichsweise niedrigen Heizwerte des Klärschlamms in erheblichem Maße Brennstoffe fossiler Art wie Gas oder Öl zugefeuert werden, um die erforderliche Verbrennungstemperatur zu erreichen. Der Einsatz von Klärschlamm direkt als Dünger ist umstritten, da der Klärschlamm auch Schwermetalle und andere Schadstoffe enthält, die durch die Verwendung als Dünger in das Grundwasser und auch in die Nahrungskette gelangen können.

Hiervon ausgehend liegt der vorliegenden Erfindung die Aufgabe zugrunde, ein Verfahren zur Gewinnung von phosphorhaltigen Verbindungen aus Klärschlamm anzugeben, mit dem die aus dem Stand der Technik gekannten Probleme zumindest teilweise überwunden werden können und insbesondere ein Verfahren anzugeben, bei dem ein Düngemittel erhalten wird, welches einen relativ hohen Phosphoranteil bei vergleichsweise niedrigen Schwermetallanteilen aufweist.

Diese Aufgaben werden gelöst durch ein Verfahren mit den Merkmalen des Anspruchs 1, die abhängigen Ansprüche sind auf vorteilhafte Weiterbildungen gerichtet.

Das erfindungsgemäße Verfahren zur Gewinnung von phosphorhaltigen Verbindungen aus Klärschlamm umfasst die folgenden Schritte:
a) Verbrennung des Klärschlamms zu einer Asche;
b) mechanische Klassierung der Asche zur Selektierung einer Aschefraktion mit einer Partikelgröße unterhalb einer vorgebbaren Maximalpartikelgröße; und
c) Behandlung der selektierten Aschefraktion zur Gewinnung von Phosphorhaltigen Verbindungen.

Unter einer mechanischen Klassierung der Asche zur Selektierung einer Aschefraktion mit einer Partikelgröße über einer vorgebbaren Mindestpartikelgröße wird insbesondere ein mechanisches Sieben der Asche verstanden. Insbesondere haben sich Maximalpartikelgrößen von 150 µm [Mikrometern], insbesondere von 140 µm oder sogar von 125 µm als vorteilhaft herausgestellt. Es hat sich überraschenderweise herausgestellt, dass eine mechanische Klassierung unter Selektion einer Aschefraktion mit einer vorgebbaren Maximalpartikelgröße eine signifikante Vergrößerung der Ausbeute an phosphorhaltigen Verbindungen im gesamten Verfahren bewirkt.

Bei der Behandlung zur Gewinnung von Phosphorhaltigen Verbindungen erfolgt gleichzeitig eine Reduktion des Anteils von Schwermetallen in der Asche. Hier sind verschiedene Verfahren erfindungsgemäß möglich.

So ist beispielsweise der Einsatz eines nass-chemischen Verfahrens, welches unter dem Namen "SESAL-Phos-Verfahren" bekannt ist, möglich. Dieses wird insbesondere dann eingesetzt, wenn die Asche der Verbrennung aluminiumhaltiger Klärschlämme aufbereitet werden muss. Dann liegt Asche vor, deren Ursprung beispielsweise Klärschlämme aus Kläranlagen sind, in denen Aluminiumsalze als Phosphor-Fällmittel eingesetzt werden. Es handelt sich um ein nass-chemisches Verfahren, also um eine Behandlung im wässrigen Medium, bei dem durch Zugabe einer Säure, wie beispielsweise Salzsäure (HCl) ein pH-Wert von beispielsweise 2,7 bis 3,2, insbesondere von etwa 3,0, erreicht wird. Danach kommt es zu einer Rücklösung und daran anschließend zu einer Erhöhung des pH-Werts durch Zugabe einer Lauge, beispielsweise durch Zugabe von Natronlauge und ggf. von Frischwasser. Bevorzugt ist dabei eine Verfahrensführung, bei der hier ein pH-Wert von mehr 12,5 und insbesondere sogar von 13 erreicht wird. Nach einer weiteren Ausfällung wird Calciumchlorid (CaCl₂) zugegeben, es kommt zu einer weiteren Ausfällung, bei der ein phosphorverbindungshaltiges Produkt ausfällt und eine aluminiumhaltige Lauge erhalten wird. Die übrigen Fällprodukte in den vorherigen Verfahrensschritten werden neutralisiert und es kommt zur Ausfällung von Restasche. Das weiterhin erhaltene Prozesswasser kann neutralisiert und wieder im Verfahren eingesetzt werden.

Bei diesem Verfahren kommt es ausgehend von einem basischen Milieu ab etwa einem pH-Wert von 4,5 zu einer Umlagerung des stets zu einem Teil als Calciumphosphat in der Asche vorliegenden Phosphors. Das bedeutet, Calcium wird freigesetzt, der rückgelöste Phosphor bleibt an der Aschematrix gebunden. Durch die Zugabe des Calciumchlorids wird Calciumphosphat gewonnen. In den Ausfällschritten fallen die Schwermetallanteile im Wesentlichen aus und werden zusammen mit der Restasche entsorgt.

Eine Alternative zur Behandlung der Asche zur Reduktion des Anteils von Schwermetallen ist ein auch als "PASCH-Verfahren" bekanntes nass-chemisches Verfahren. Hierbei wird aus der bei der Verbrennung des Klärschlamms entstehenden Asche durch ein nass-chemisches Aufschlussverfahren Phosphor rückgewonnen. Hierbei erfolgt zunächst eine nass-chemische Aufarbeitung der Asche durch gezielte Laugung und damit Rücklösung des Phosphors aus der Aschematrix. Daran schließt sich eine Abtrennung der Metalle durch Solventextraktion aus dem phosphorreichen Filtrat der Laugung an, wodurch Schwermetalle und Aluminium im Wesentlichen entfernt werden. Daran anschließend erfolgt eine Produktfällung durch Anhebung des pH-Werts. Hierdurch wird ein schadstoffarmes und phosphorreiches Produkt auf Basis von Calcium- und/oder Magnesium-Zugabe aus dem Raffinat der Solventextraktion gewonnen.

Eine weitere Möglichkeit der Behandlung zur Reduktion des Anteils von Schwermetallen in der Asche ist ein thermo-chemischen Verfahren, welches auch als "AshDec-Verfahren" bekannt ist. Hierbei erfolgt eine thermische Behandlung der Asche, so dass die Schwermetalle in der Asche durch Verdampfung im Wesentlichen entfernt werden. Hierbei wird zunächst die phosphathaltige Asche mit Calciumchlorid (CaCl₂) und/oder Magnesiumchlorid (MgCl₂) versetzt. Diese werden in - bevorzugt destilliertem - Wasser gelöst, mit der Asche vermischt, so dass sich ein Wassergehalt von etwa 30 % in der Asche einstellt. Dieses Gemisch wird anschließend einer thermischen Behandlung zugeführt, die bevorzugt in geschlossenen Systemen, wie beispielsweise Drehrohröfen, durchgeführt werden. Hierbei wird die Asche auf Temperaturen von ca. 1.000 °C gebracht, so dass die Schwermetalle in die entsprechenden Chloride überführt werden und verdampfen. Hier ist eine Behandlung des Abgases vorteilhaft, beispielsweise über einen entsprechenden Nasswäscher, zur Reduktion des Schwermetallanteils im Abgas.

Eine weitere Alternative besteht in der elektrokinetischen Phosphorrückgewinnung aus Klärschlammmasse, die beispielsweise als "EPHOS-Verfahren" bezeichnet wird. Durch ein gerichtetes elektrisches Feld und die damit verbundenen elektrokinetischen Stofftransportvorgänge werden Schwermetall und Phosphat getrennt, da Phosphat als Anion und Schwermetalle zumindest teilweise als Kationen vorliegen.

Da mit dem Verfahren zur Gewinnung von phosphorhaltigen Verbindungen aus der selektierten Aschefraktion gleichzeitig der Anteil an Schwermetallen signifikant gesenkt wird, erhält man durch das erfindungsgemäße Verfahren ein Endprodukt, welches direkt als Dünger eingesetzt werden kann oder welches Dünger zugesetzt werden kann. So ist es möglich, die im Klärschlamm gebundenen Phosphorverbindungen auf einfache und effiziente Art und Weise zu einem direkt einsetzbaren Dünger zu verarbeiten. Die Nachteile, die beispielsweise beim Direktauftrag von Klärschlamm als Dünger vorliegen, beispielsweise das Risiko, dass Schwermetalle in das Grundwasser gelangen, bestehen hier nicht, da im Verfahrensschritt c) gleichzeitig der Anteil an Schwermetallen in der selektierten Aschefraktion signifikant reduziert werden. Durch die mechanische Klassierung, die insbesondere als ein Sieben oder auch ein Sichten gestaltet ist, kann eine signifikante Erhöhung des Phosphoranteils im Endprodukt im Vergleich zu einer Verfahrensführung ausschließlich aus den Verfahrensschritten a) und c) erreicht werden. Bevorzugt wird dabei die Maximalpartikelgröße so festgelegt, dass etwa 80 % der Menge der ursprünglich im Verfahrensschritt a) erhaltenen Asche zur selektierten Aschefraktion zählen und die größten Partikel abgetrennt werden.

Gemäß einer vorteilhaften Ausgestaltung des Verfahrens wird ein fossiler Brennstoff als zusätzlicher Brennstoff bei der Verbrennung des Klärschlamms eingesetzt.

Bei dem fossilen Brennstoff kann es sich bevorzugt um Öl, Gas und/oder Kohle handeln. Der fossile Brennstoff wird insbesondere als Stützbrennstoff im Rahmen einer Monoverbrennung eingesetzt. Hier dient der zusätzliche Brennstoff zum Ausgleich des üblicherweise geringen Heizwerts von Klärschlamm.

Alternativ ist es auch möglich, den Klärschlamm im Rahmen einer Mitverbrennung in einem üblichen Kraftwerk wie beispielsweise einem gas- oder kohlebetriebenen Dampfkraftwerk einzusetzen. Hierbei wird der fossile Brennstoff in einem Kessel verbrannt zur Erzeugung von Dampf. Insbesondere beim Einsatz von festen fossilen Brennstoffen wie beispielsweise Kohle, insbesondere Steinkohle oder Braunkohle, kann der Klärschlamm in einfacher Art und Weise mit dem festen Brennstoff gemeinsam verbrannt werden. Auch die Mitverbrennung in Gas- oder Ölkraftwerken ist möglich und erfindungsgemäß. Hierbei wird der Klärschlamm in den Kessel beziehungsweise die Brennkammer eingebracht und dort gemeinsam mit dem fossilen Brennstoff verbrannt.

Gemäß einer weiteren vorteilhaften Ausgestaltung wird Kohle als zusätzlicher Brennstoff bei der Verbrennung des Klärschlamms eingesetzt.

Auch hier ist es möglich, die Kohle, insbesondere Braunkohle, als Stützbrennstoff im Rahmen einer Monoverbrennung des Klärschlamms einzusetzen oder, bevorzugt, der Klärschlamm im Rahmen einer Kohleverbrennung mitverbrannt wird. Insbesondere die Mitverbrennung in einem üblichen Kohlekraftwerk hat den Vorteil, dass hier Hochdruckdampf erzeugt wird, der sich effizient energetisch nutzen lässt, wohingegen bei aus dem Stand der Technik bekannten Monoverbrennungen von Klärschlamm üblicherweise nur Niederdruckdampf erzeugt wird.

Gemäß einer weiteren vorteilhaften Ausgestaltung des Verfahrens erfolgt die Verbrennung in einer Wirbelschichtfeuerung.

Insbesondere hat sich hier eine zirkulierende Wirbelschicht als vorteilhaft erwiesen. Durch den Einsatz einer Wirbelschichtfeuerung, insbesondere mit einem anderen granularen Brennstoff wie beispielsweise Kohle erreicht man aufgrund der guten Durchmischung der Granuli in der Wirbelschicht eine signifikante Verschiebung des Phosphorgehalts in Abhängigkeit von der Größe der entsprechenden Granuli, so dass hier der Einsatz eines mechanischen Klassierverfahrens wie beispielsweise eines Siebverfahrens eine besonders hohe Anreicherung des Phosphors in der selektierten Aschefraktion bewirkt. Eine so erzeugte selektierte Aschefraktion weist einen vergleichsweise hohen Phosphorgehalt auf, der einen wirtschaftlichen Einsatz der Phosphorverbindung ohne weiteres zulässt.

Gemäß einer weiteren vorteilhaften Ausgestaltung des Verfahrens liegt die vorgebbare Maximalpartikelgröße bei höchstens 150 µm, bevorzugt bei höchstens 140 µm, besonders bevorzugt bei höchstens 125 µm.

Die hier angegebenen Maximalpartikelgrößen führen zu einer signifikanten Reduktion der Menge an zu bearbeitendem Material bei im Wesentlichen konstanter Phosphorbeladung. Dies liegt daran, dass sich die phosphorhaltigen Verbindungen oder der Phosphor nach Versuchen der Anmelderin sich gerade nicht an großen Ganuli anlagern, sondern vielmehr bevorzugt in oder an kleinen Granuli zu finden sind. Versuche der Anmelderin haben gezeigt, dass deutlich mehr als 90 % des Phosphors in oder an den Granuli einer Größe bis 125 µm vorliegt. Durch die mechanische Klassierung kann so eine signifikante Erhöhung des Phosphoranteils im Endprodukt erreicht werden, da andererseits die Gesamtmasse des Endprodukts signifikant reduziert werden kann.

Gemäß einer vorteilhaften Ausgestaltung des Verfahrens umfasst die Behandlung in Verfahrensschritt c) die folgenden Schritte:
A) Zugabe einer Säure, insbesondere von Salzsäure, zur Reduktion des pH-Werts;
B) Abtrennen eines ersten Feststoffanteils;
C) Zugabe einer Lauge, insbesondere von Natronlauge, zur Erhöhung des pH-Werts;
D) Abtrennen eines zweiten Feststoffanteils;
E) Zugabe einer Calciumverbindung, insbesondere von Calciumchlorid; und
F) Abtrennen eines calciumphosphathaltigen Feststoffanteils.

Insbesondere handelt es sich hier um das sogenannte SESAL-Phos-Verfahren zur Rückgewinnung von Phosphor und Aluminium aus Klärschlämmen mittels kombinierter saurer und basischer Elution. Das Verfahren wird beispielsweise in der Publikation von P. Cornel und C. Schaum "Phosphorus recovery from wastewater: needs, technologies and costs", erschienen in Water Sceince & Technology-WST, 59.6, 1009, S. 1069-1076 beschrieben, deren Inhalt in Bezug auf das Verfahren als solches und die Details der Verfahrensführung hiermit in diese Anmeldung aufgenommen wird.

Es handelt sich hierbei um ein so genanntes nasschemisches Verfahren zur Phosphorgewinnung, bei dem die Asche mit neutralisiertem Wasser vermischt und dann durch Zugabe einer Säure wie beispielsweise Salzsäure angesäuert wird. Bevorzugt wird hierbei ein pH-Wert im Bereich von 2,7 bis 3,2 gewählt, wodurch zur Lösung bestimmter Verbindungen in der sauren Lösung kommt. So werden beispielsweise Phosphor aber auch andere Stoffe wie Calcium, Magnesium, Kalium und auch ein Teil der Schwermetalle wieder in Lösung gebracht. Das Ausfällen des ersten Feststoffanteils reduziert von daher den Phosphoranteil nicht wesentlich, es führt jedoch schon zu einer signifikanten Reduktion des Schwermetallanteils. Nach einer Fest-Flüssigtrennung bleibt ein Teil der Asche zurück, dieser wird in einem weiteren Behandlungsschritt C) durch Zugabe einer Lauge wie beispielsweise Natronlauge eluiert. Hierzu ist ein pH-Wert von etwa 13 besonders vorteilhaft. Hierdurch gehen insbesondere Phosphor und Aluminium in Lösung, durch einen nachfolgenden Waschschritt lässt sich die Phosphorausbeute noch weiter signifikant erhöhen. Nach Trennung dieser Lösung von der Asche wird Calciumphosphat mittels Zugabe von Calciumchlorid in Schritt F) gewonnen. Die Abtrennung kann dabei auf üblichem Wege erfolgen.

Gemäß einer Alternative der Behandlung in Verfahrensschritt c) umfasst die Behandlung eine Erhitzung der selektierten Aschefraktion auf eine Temperatur oberhalb einer Verdampfungstemperatur vorgebbarer Schwermetall-Verbindungen.

Hierbei handelt es sich insbesondere um das so genannte AshDec-Verfahren. Das Verfahren wird beispielsweise in der Publikation von C. Adam, B. Peplinski, G. Kley, S. Kratz, J. Schick und E. Schnug, "Phosphorrückgewinnung aus Klärschlammaschen - Ergebnisse aus dem EU-Projekt SUSAN", erschienen in der Österr. Wasser- und Abfallwirtschaft, Heft 3 - 4, März/April 2008, 60. Jahrgang, S. 55 bis 64 beschrieben, deren Inhalt in Bezug auf das Verfahren als solches und die Details der Verfahrensführung hiermit in diese Anmeldung aufgenommen wird. Hierbei wird darauf abgezielt, durch eine thermische Behandlung der entsprechenden Asche die Schwermetalle durch Verdampfung aus der Asche zu entfernen, um die Austragung von Schwermetallen in die Landwirtschaft zu verhindern. Weiterhin werden dadurch Phosphate erzeugt, die direkt für Pflanzen verfügbar sind. Hierbei wird gemäß einer vorteilhaften Ausgestaltung dieses Verfahrens die phosphorhaltige selektierte Aschefraktion mit Calciumchlorid und/oder Magnesiumchlorid versetzt, die in Wasser gelöst und mit der Asche vermischt werden. Bevorzugt ist dabei eine Verfahrensführung, bei der die dadurch erhaltene Asche einen Wassergehalt von etwa 30 % aufweist. Dieser Ausgangsstoff wird dann einer thermischen Behandlung, beispielsweise in einem Drehrohrofen oder auch einem Wirbelschichttrockner, zugeführt. Hierbei wird der Ausgangsstoff auf Temperaturen von etwa 1.000 °C erhitzt, so dass die in der selektierten Aschefraktion vorliegenden Schwermetalle in die entsprechenden Chloride umgesetzt werden und diese dann verdampfen. Eine Behandlung des entsprechenden Abgases ist vorteilhafterweise über einen Nasswäscher möglich.

Durch eine derartige Verfahrensführung kann aus der selektierten Aschefraktion eine signifikante Reduktion der enthaltenen Schwermetalle erfolgen. So kann der Anteil von Blei, Cadmium, Kupfer und Zink um mehr als 90 % reduziert werden, der Anteil von Molybdän um mehr als 80 % und der Anteil von Zinn um mehr als 70 %. Die Dosis des Calciumchlorids beziehungsweise des Magnesiumchlorids, die zugeführt wird, wird dabei bevorzugt so eingestellt, dass etwa 50 bis100 g Chlor pro Kilogramm Asche zugegeben werden. So kann eine signifikante Reduktion der Schwermetalle in der Asche erfolgen.

Weiterhin werden durch die thermische Behandlung die in der selektierten Aschefraktion vorhandenen Phosphate in pflanzenverfügbare Magnesiumphosphate überführt. Es hat sich herausgestellt, dass nach der thermischen Behandlung deutlich mehr als 50 % und insbesondere bis zu 100 % des enthaltenen Phosphor zitronensäurelöslich sind, während die Rohasche in der selektierten Aschefraktion etwa 30 bis 50 % zitronensäurelöslichen Phosphor aufweisen.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Schaubild zur Veranschaulichung des erfindungsgemäßen Verfahrens;
- Fig. 2:: ein Schaubild einer ersten Variante des Verfahrensschritts zur Behandlung der selektierten Aschefraktion zur Gewinnung von phosphorhaltigen Verbindungen; und
- Fig. 3:: ein Schaubild einer zweiten Variante dieses Verfahrensschritts.

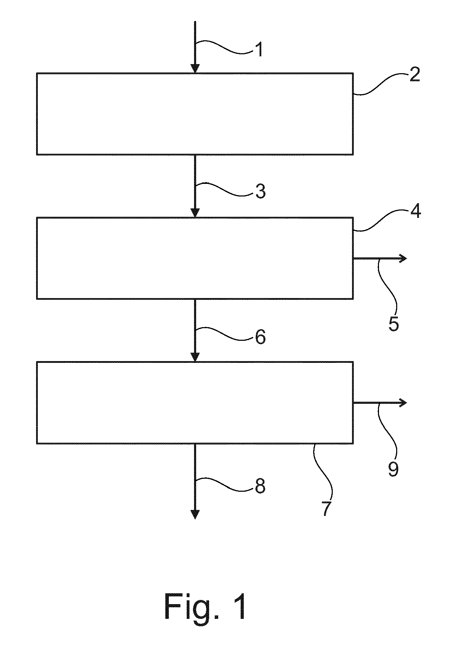

Fig. 1 zeigt ein Verfahren zur Gewinnung von phosphorhaltigen Verbindungen aus einem Klärschlamm 1. Der Klärschlamm 1 wird einer Verbrennung 2 zugeführt. Ergebnis dieser Verbrennung 2 ist eine Asche 3, die einer mechanischen Klassierung 4, hier einem entsprechenden Siebvorgang, zugeführt wird. Hierbei werden Anteile einer Partikelgröße oberhalb einer vorgebbaren Maximalpartikelgröße als Ausschussfraktion 5 entfernt, während eine selektierte Aschefraktion 6 mit Partikelgrößen unterhalb der vorgebbaren Maximalpartikelgröße einer Behandlung 7 zur Gewinnung von phosphorhaltigen Verbindungen zugeführt wird. Hierbei liegt die vorgebbare Maximalpartikelgröße bevorzugt bei 125 µm. Die Maximalpartikelgröße kann beim Sieben als mechanische Klassierung 4 über eine entsprechende Wahl der Siebgröße vorgegeben werden. Alternativ oder zusätzlich wird die mechanische Klassierung 4 so betrieben, dass etwa 80 Massen-% der ursprünglich eingesetzten Asche 3 in der selektierten Aschefraktion 6 vorhanden sind und etwa 20 Masse-% der ursprünglichen Asche 3 als Ausschussfraktion 5 aus dem Verfahren entfernt werden. Ergebnis der Behandlung 7 zur Gewinnung von phosphorhaltigen Verbindungen ist ein Endprodukt 8, in dem die phosphorhaltigen Verbindungen aufkonzentriert sind und Ausschuss 9, welcher insbesondere Schwermetalle und andere Schadstoffe umfasst.

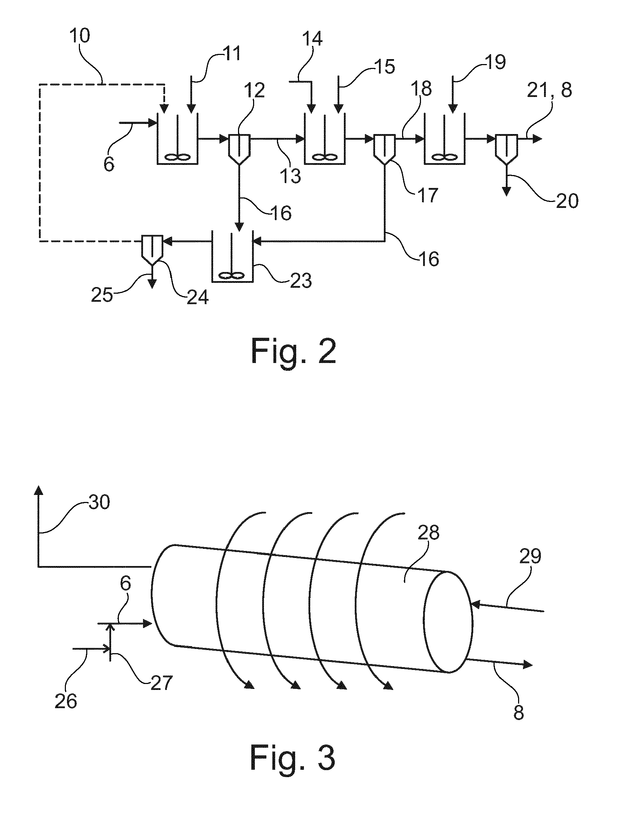

Unter Bezugnahme auf die schematischen Fig. 2 und 3 werden nunmehr zwei Alternativen der Behandlung 7 zur Gewinnung von phosphorhaltigen Verbindungen aufgezeigt.

Fig. 2 zeigt schematisch ein erstes Beispiel einer solchen Behandlung 7. Es handelt sich hierbei um eine nasschemische Behandlung nach dem so genannten SESAL-Phos-Verfahren. Hierbei wird die selektierte Aschefraktion 6 mit Wasser 10 und Salzsäure 11 versetzt. Hierdurch wird der pH-Wert auf einen Bereich von 2,7 bis 3,2 eingestellt. Diese Verfahrensstufe weist eine Verweildauer von bevorzugt 6 Stunden und mehr, insbesondere von 8 Stunden und mehr auf. Es kommt hierbei zu einem sauren Aufschluss beziehungsweise zur Rücklösung von Phosphor und anderen Stoffen wie beispielsweise Kalium, Magnesium, Calcium, Eisen, Aluminium, Kupfer, Zink, Blei, Cadmium, Chrom und Nickel. Ausgehend von einem basischen Milieu kommt es etwa ab einem pH-Wert von 4,5 zu einer Umlagerung des stets zu einem Teil als Calciumphosphat in der selektierten Aschefraktion 6 vorliegenden Phosphors. Das bedeutet, dass Calcium freigesetzt wird, der dadurch ebenfalls rückgelöste Phosphor bleibt jedoch an der Aschematrix gebunden.

Für diese saure Behandlung der selektierten Aschefraktion 6 bei einem pH-Wert von etwa 3 kommt es neben der Rücklösung von Calcium auch zur Rücklösung von Magnesium, Kalium und eines Teils der Schwermetalle. Phosphor wird nur zu geringen Teilen rückgelöst. Nach Ende der Verweildauer erfolgt eine erste Fest-Flüssig-Trennung 12. Die dabei erhaltene behandelte Aschefraktion 13 wird durch Zugabe von Natronlauge 14 und gegebenenfalls von Wasser 15, welches bevorzugt Frisch-Wasser ist, also von außen in den Prozess eingeführt wird, weiterbehandelt, während das entsprechende Prozesswasser 16 einer Aufbereitung zugeführt wird.

Der behandelten Aschefraktion 13 wird Natronlauge 14 und Wasser 15 in einem solchen Maße zugegeben, dass sich ein pH-Wert von etwa 13 einstellt. Dieser Behandlungsschritt weist eine Verweildauer von bevorzugt 6 Stunden mehr und insbesondere von etwa 8 Stunden und mehr auf.

Durch diesen basischen Aufschluss kommt es zu einer Rücklösung insbesondere auch von Phosphor und Aluminium. Durch einen nachgeschalteten hier nicht gezeigten Spülschritt lässt sich die Phosphorausbeute weiter erhöhen. Nachfolgend erfolgt die zweite Fest-Flüssig-Trennung 17, der so erhaltenen behandelten Aschefraktion 18 wird Calciumchlorid 19 zugeführt, so dass Calciumphosphat erhalten wird. Das Prozessabwasser 16 der zweiten Fest-Flüssig-Trennung 17 wird dabei ebenfalls einer Aufbereitung zugeführt. Im Anschluss an das Hinzufügen von Calciumchlorid 19 erfolgt eine dritte Fest-Flüssig-Trennung 20, wodurch ein calciumphosphathaltiger Feststoffanteil 21 und ein aluminiumhaltiger Überstand 22 gewonnen wird, welches beispielsweise als Fällmittel in Kläranlagen beispielsweise zur Phosphorelimination wiederverwendet werden kann. Der calciumphosphathaltige Feststoffanteil 21 kann dabei direkt als Dünger eingesetzt oder anderen Düngerbestandteilen hinzugefügt werden. Durch die hier beschriebene nass-chemische Behandlung der selektierten Aschefraktion 6 wird ein schwermetallarmer phosphorreicher Endstoff, nämlich der calciumphosphathaltige Feststoffanteil 21 - das Endprodukt 8 -, erhalten, dessen Schwermetallanteile deutlich geringer als in der Asche 3 und dessen Phosphorgehalt deutlich höher ist als in der Asche 3.

Unter Prozesswasser 16 werden hier die Flüssiganteile der Fest-Flüssig-Trennungen 12, 17 verstanden. Diese werden einer entsprechenden Neutralisation 23 und einer anschließenden Fest-Flüssig-Trennung 24 unterzogen. Die im Rahmen der Fest-Flüssig-Trennung 24 erhaltene Restasche 25 ist vergleichsweise hoch mit Schwermetallen versehen und ist folglich bevorzugt einer entsprechenden Entsorgung oder Lagerung zuzuführen. Das entstehende Wasser kann entsprechend als Wasser 10 wieder in den Prozess eingebracht werden.

Fig. 3 zeigt schematisch eine Alternative der Behandlung 7 zur Gewinnung von phosphorhaltigen Verbindungen. Hierbei handelt es sich nicht um ein nasschemisches Verfahren wie in Fig. 2 gezeigt, sondern vielmehr um ein thermochemisches Verfahrens. Hierbei wird die selektierte Aschefraktion 6 mit Chloriden 16 versetzt, die über Wasser 27 der selektierten Aschefraktion 6 zugeführt werden. Hierbei ist die Verfahrensführung insbesondere so gewählt, dass nach Zuführen des Wassers 27 mit den Chloriden 26 ein Wasseranteil von etwa 30 Massen-% erreicht wird und zudem eine Gabe von Chloriden 26, nämlich Calciumchlorid und/oder Magnesiumchlorid, erfolgt, die im Bereich von 50 bis 100 g Chlor pro Kilogramm Asche liegt.

Diese Mischung des Wassers 27, der Chloride 26 und die selektierte Aschefraktion 6 wird einem Drehrohrofen 28 zugeführt. Unter einem Drehrohrofen 28 wird beispielsweise ein Ofen oder Trockner verstanden, der einen sich drehenden, zylindrischen Behälter, die so genannte Trommel, umfasst, dessen Drehachse gegenüber der Waagerechten üblicherweise leicht geneigt ist. Die Trommel weist eine Vielzahl von Röhren auf, die die Trommel zwischen den so genannten Rohrböden der Trommel durchqueren. Die selektierte Aschefraktion 6 wird dabei in die Röhren eingegeben und durch diese durch die Drehbewegung und gegebenenfalls entsprechende Wendeleisten in den Röhren transportiert.

Dieser Drehrohrofen 28 dreht sich um eine vorgebbare Achse, wie dies durch die entsprechenden Pfeile in Figur 3 angedeutet ist. Im Laufe der Verweildauer im Drehrohrofen 28 wird die selektierte Aschefraktion 6 durch den Drehrohrofen 28 transportiert und dabei auf Temperaturen von etwa 1.000 °C erhitzt. Im Gegenstrom wird eine Luftströmung 29 durch den Drehrohrofen 28 geführt. Bei den im Drehrohrofen 28 anliegenden Temperaturen von 1.000 °C und mehr werden die entsprechend in der selektierten Aschefraktion 6 vorliegenden Schwermetalle in die entsprechenden Schwermetallchloride überführt und diese dann verdampft. Durch die Luftströmung 29 erfolgt dabei der Abtransport der entsprechenden verdampften Schwermetallchloride, die als entsprechendes Abgas 30 einer entsprechenden Aufbereitung zugeführt werden. Hierbei kann es sich insbesondere um einen Nasswäscher handeln. Den Drehrohrofen 28 verlässt ein Endprodukt 8, welches im Vergleich zur eingetragenen selektierten Aschefraktion 6 signifikant reduziert in Bezug auf die vorhandenen Schwermetalle ist und dessen Phosphorgehalt sich einerseits leicht erhöht hat. Andererseits kommt es durch die thermische Behandlung zu einer Reaktion der in der selektierten Aschefraktion 6 vorliegenden Phosphorverbindungen zur Magnesiumphosphat, welches direkt von den entsprechenden Pflanzen aufnehmbar ist.

Ein Maß für die entsprechende Aufnehmbarkeit durch Pflanzen ist die Zitronensäurelöslichkeit der entsprechenden Aschen. Es hat sich gezeigt, dass durch das in Fig. 3 beschriebene Verfahren bis zu 100 % des Phosphors, jedoch in jedem Fall signifikant mehr als 50 % des zur Verfügung stehenden Phosphors zitronensäurelöslich sind. Vergleicht man hier die entsprechenden zitronensäurelöslichen Anteile in der selektierten Aschefraktion, so stellt man fest, dass nur etwa 30 bis 50 % des Phosphors in der selektierten Aschefraktion zitronensäurelöslich sind. Die thermochemische Behandlung führt zu somit einer sehr hohen Akzeptanz und Aufnehmbarkeit des entsprechenden Phosphors im Endprodukt 8. Dieses lässt sich direkt als Dünger einsetzten oder aber anderen Komponenten als Dünger zufügen.

Die hier beschriebene Verfahrensführung eines Verfahrens zur Gewinnung von phosphorhaltigen Verbindungen aus Klärschlamm 1 führt aufgrund der mechanischen Klassierung 4 zu einer deutlich höheren Ausbeute an Phosphor und zu einem deutlich höheren Phosphorgehalt im endgültigen Endprodukt 8. Insbesondere das im Zusammenhang mit Fig. 3 beschriebene thermo-chemische Verfahren ist bevorzugt, weil der hierzu betreibende apparative Aufwand geringer ist als bei der nass-chemischen Variante der Fig. 2 und zudem die Behandlungszeit deutlich kürzer ist als beim oben beschriebenen nass-chemischen Verfahren. Das hier beschriebene Verfahren erlaubt eine effiziente Verbrennung des anfallenden Klärschlamms 1 bei einer gleichzeitig vorliegenden hohen Phosphorausbeute in den entsprechend erhaltenen Endprodukten 8 nach mechanischer Klassierung der Asche 3. So kann sowohl bei der Monoverbrennung als auch bei der Mitverbrennung von Klärschlamm 1 ein relativ hochphosphorhaltiger Dünger erhalten werden, so dass der im Abwasser vorhandene Phosphorgehalt nicht ungenutzt verschwendet wird. So kann eine effiziente Nutzung dieser Phosphorverbindungen als Dünger sichergestellt werden.

### Bezugszeichenliste

- 1: Klärschlamm
- 2: Verbrennung
- 3: Asche
- 4: mechanische Klassierung
- 5: Ausschussfraktion
- 6: selektierte Aschefraktion
- 7: Behandlung zur Gewinnung von phosphorhaltigen Verbindungen
- 8: Endprodukt
- 9: Ausschuss
- 10: Wasser
- 11: Salzsäure
- 12: erste Fest-Flüssig-Trennung
- 13: behandelte Aschefraktion
- 14: Natronlauge
- 15: Wasser
- 16: Prozessabwasser
- 17: zweite Fest-Flüssig-Trennung
- 18: behandelte Aschefraktion
- 19: Calciumchlorid
- 20: dritte Fest-Flüssig-Trennung
- 21: calciumphosphathaltiger Feststoffanteil
- 22: aluminiumhaltiger Überstand
- 23: Neutralisation
- 24: Fest-Flüssig-Trennung
- 25: Restasche
- 26: Chloride
- 27: Wasser
- 28: Drehrohrofen
- 29: Luftströmung
- 30: Abgas

## Patentansprüche

1. Verfahren zur Gewinnung von phosphorhaltigen Verbindungen aus Klärschlamm (1), umfassend die folgenden Schritte:
a) Verbrennung (2) des Klärschlamms (1) zu einer Asche (3);
b) mechanische Klassierung (4) der Asche (3) zur Selektierung einer Aschefraktion (6) mit einer Partikelgröße unterhalb einer vorgebbaren Maximalpartikelgröße; und
c) Behandlung der selektierten Aschefraktion (6) zur Gewinnung von Phosphorhaltigen Verbindungen.

2. Verfahren nach Anspruch 1, bei dem ein fossiler Brennstoff als zusätzlicher Brennstoff bei der Verbrennung des Klärschlamms (1) eingesetzt wird.

3. Verfahren nach einem der vorhergehenden Ansprüche, bei dem Kohle als zusätzlicher Brennstoff bei der Verbrennung des Klärschlamms (1) eingesetzt wird.

4. Verfahren nach einem der vorhergehenden Ansprüche, bei dem die Verbrennung in einer Wirbelschichtfeuerung erfolgt.

5. Verfahren nach einem der vorhergehenden Ansprüche, bei dem die vorgebbare Maximalpartikelgröße bei höchstens 150 µm [Mikrometern], bevorzugt bei höchstens 140 µm, besonders bevorzugt bei höchstens 125 µm liegt.

6. Verfahren nach einem der vorhergehenden Ansprüche, bei dem die Behandlung die folgenden Schritte umfasst:
A) Zugabe einer Säure, insbesondere von Salzsäure, zur Reduktion des pH-Wertes;
B) Abtrennen eines ersten Feststoffanteils;
C) Zugabe einer Lauge, insbesondere von Natronlauge, zur Erhöhung des pH-Wertes;
D) Abtrennen eines zweiten Feststoffanteils;
E) Zugabe einer Calciumverbindung, insbesondere von Calciumchlorid; und
F) Abtrennen eines Calciumphosphathaltigen Feststoffanteils.

7. Verfahren nach einem der Ansprüche 1 bis 5, bei dem die Behandlung eine Erhitzung der selektierten Aschefraktion (6) auf eine Temperatur oberhalb einer Verdampfungstemperatur vorgebbarer Schwermetall-Verbindungen umfasst.

8. Verfahren nach Anspruch 7, bei dem die selektierte Aschefraktion (6) mit mindestens einem der folgenden Stoffe versetzt wird:
i) Calciumchlorid (CaCl₂) und
ii) Magnesiumchlorid (MgCl₂).
